# EUROPÄISCHE PATENTSCHRIFT

(11) **EP 0 775 731 B1**
(45) Veröffentlichungstag und Bekanntmachung des Hinweises auf die Patenterteilung: **29.12.1999**
(21) Anmeldenummer: 96810799.5
(22) Anmeldetag: 14.11.1996
(51) Int. Cl.: C09B 62/085, C09B 62/51, C09B 62/473, C09B 62/008

(54) **Reaktivfarbstoffe, Verfahren zu deren Herstellung und deren Verwendung**
Reactive dyestuffs, process for their preparation and use thereof
Colorants réactifs, procédé pour leur préparation et leur utilisation

(30) Priorität: 23.11.1995 CH 331795
(43) Veröffentlichungstag der Anmeldung: 28.05.1997
(73) Patentinhaber: Ciba Specialty Chemicals Holding Inc., 4057 Basel (CH)
(72) Erfinder: Lehmann, Urs, 4052 Basel (CH); Frick, Marcel, 4153 Reinach (CH)

(56) Entgegenhaltungen:
- EP-A- 0 074 928
- EP-A- 0 179 019
- EP-A- 0 369 385
- EP-A- 0 499 588
- JP-A- 53 046 328

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefcrdert, die einen hohen Ausziehgrad und hohen Fixiergrad aufweisen, wobei insbesondere keine alkalische Nachbehandlung zur Entfernung nicht fixierten Farbstoffs notwendig ist. Sie sollten ferner eine gute färberische Ausbeute und eine hohe Reaktivität aufweisen. Von den bekannten Farbstoffen werden diese Anforderungen nicht in allen Eigenschaften erfüllt.

Aus der EP-A-0 074 928 und der EP-A-0 499 588 sind Farbstoffe bekannt, welche sich von den erfindungsgemässen Farbstoffen hinsichtlich der faserreaktiven Gruppe unterscheiden. Aus der EP-A-0 179 019 und der JP-A-78/46328 sind Farbstoffe bekannt, welche sich von den erfindungsgemässen Farbstoffen hinsichtlich der Zahl der Sulfogruppen unterscheiden.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Ausziehgrade, hohe Fixierausbeuten und hohe Faser-Farbstoff-Bindungsstabilitäten auszeichnen. Sie sollten ferner Färbungen mit guten Allgemeinechtheiten, beispielsweise Licht- und Nassechtheiten, ergeben.

Es hat sich gezeigt, dass mit den weiter unten definierten Reakiivfarbstoffen die gestellte Aufgabe weitgehend gelöst wird.

Gegenstand der Erfindung sind daher Reaktivfarbstoffe der Formel 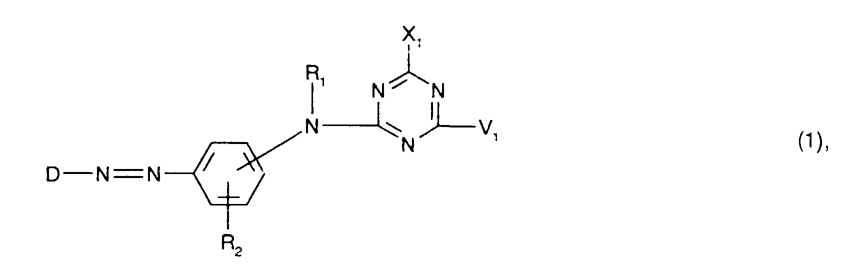 worin
R₁ Wasserstoff oder gegebenenfalls substituiertes C₁-C₄-Alkyl ist,
R₂ Wasserstoff, C₁-C₄-Alkyl, C₁-C₄-Alkoxy, C₂-C₄-Alkanoylamino, Ureido, Halogen oder Sulfo ist,
X₁ Fluor oder Chlor,
V₁ ein Rest der Formel

   -NH-(CH₂)₂₋₃-O-(CH₂)₂₋₃-SO₂Z (2b),

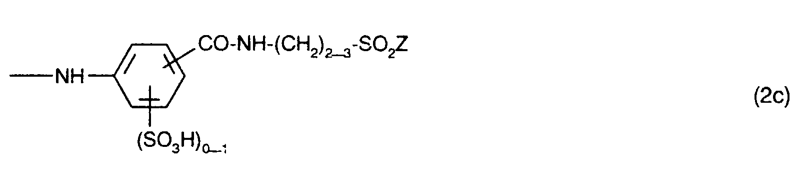

   oder 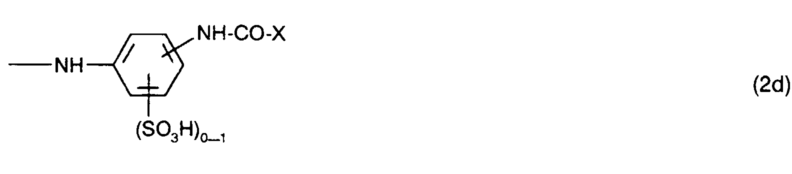 ist,
wobei
Z der Rest -CH=CH₂ oder -CH₂-CH₂-Y und Y eine Abgangsgruppe ist, und
X der Rest 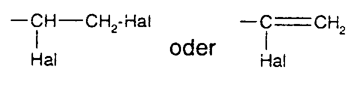 und Hal Halogen ist,
D ein Rest der Formel 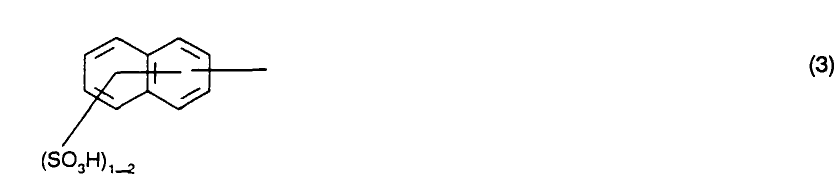 oder 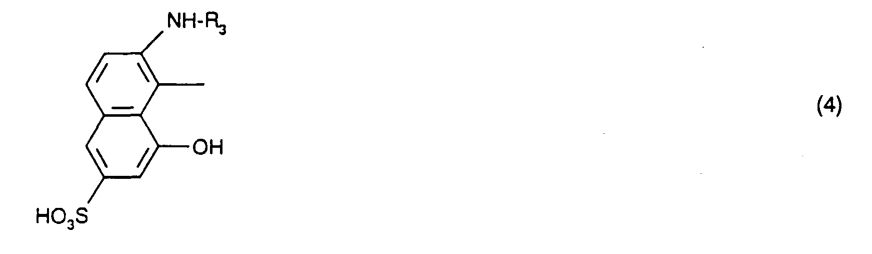 ist, worin R₃ Wasserstoff oder C₁-C₄-Alkyl ist, und
wobei die Reaktivfarbstoffe der Formel (1) nicht mehr als zwei Sulfogruppen enthalten, mit der Massgabe dass, falls D ein Rest der Formel (3) ist, V₁ einen Rest der Formel (2d) bedeutet.

Als C₁-C₄-Alkylreste kommen für R₁ z.B. Methyl, Aethyl, Propyl, Isopropyl, Butyl, sek.-Butyl, tert.-Butyl oder Isobutyl in Betracht. Die genannten Alkylreste können unsubstituiert oder z.B. durch Hydroxy, Sulfo oder Sulfato substituiert sein.

Bevorzugt ist R1 Wasserstoff oder gegebenenfalls durch Hydroxy, Sulfo oder Sulfato substituiertes C₁-C₄-Alkyl, insbesondere Wasserstoff oder C₁-C₄-Alkyl, und vorzugsweise Wasserstoff.

Als C₁-C₄-Alkyl kommt für R₂ und R₃ z.B. Methyl, Äthyl, Propyl, Isopropyl, Butyl, sek.-Butyl, tert.-Butyl oder Isobutyl, insbesondere Methyl, in Betracht.

Als C₁-C₄-Alkoxy kommt für R₂ z.B. Methoxy, Äthoxy, Propoxy, Isopropoxy, Butoxy oder Isobutoxy, insbesondere Methoxy, in Betracht.

Als Halogen kommt für R₂ Fluor, Chlor oder Brom, insbesondere Chlor, in Betracht.

Als C₂-C₄-Alkanoylamino kommt für R₂ insbesondere Acetylamino oder Propionylamino, vorzugsweise Acetylamino, in Betracht.

Hal steht bevorzugt für Chlor oder insbesondere Brom.

Bei der Abgangsgruppe Y handelt es sich z.B. um -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂. Bevorzugt ist Y eine Gruppe der Formel -Cl, -OSO₃H, -SSO₃H, -OCO-CH₃, -OCO-C₆H₅ oder -OPO₃H₂, insbesondere -Cl, -OSO₃H oder -OCO-CH₃ und besonders bevorzugt -Cl oder -OSO₃H. Ganz besonders bevorzugt ist Y eine Gruppe der Formel -OSO₃H.

X₁ ist bevorzugt Chlor.

Bevorzugt enthalten die Reaktivfarbstoffe der Formel (1) zwei Sulfogruppen.

Bevorzugt sind Reaktivfarbstoffe der Formel (1), worin
R₁ Wasserstoff oder C₁-C₄-Alkyl, insbesondere Wasserstoff,
R₃ Wasserstoff oder Methyl, insbesondere Wasserstoff,
X₁ Chlor, Y -Cl oder -OSO₃H und
Hal Chlor oder Brom. insbesondere Brom, ist.

Bei den in den Formeln (2b) und (2c) enthaltenen Resten -(CH₂)₂₋₃- handelt es sich bevorzugt um solche der Formel -(CH₂)₂-.

Bevorzugte Reste V₁ sind solche der Formeln (2c) oder (2d) und vorzugsweise solche der Formel (2d).

Als Reste D der Formel (3) sind solche bevorzugt, welche zwei Sulfogruppen enthalten und welche vorzugsweise in 2-Stellung an die Azogruppe gebunden sind. Weiterhin von Interesse sind Reste D der Formel (3), welche eine Sulfogruppe, insbesondere in 6-Stellung, enthalten und welche vorzugsweise in 2-Stellung an die Azogruppe gebunden sind. Von Interesse sind ferner Reste D der Formel (3), welche nur eine Sulfogruppe enthalten und welche vorzugsweise in 1-Stellung an die Azogruppe gebunden ist.

Besonders bevorzugt handelt es sich bei dem Rest D der Formel (3) um einen Rest der Formel

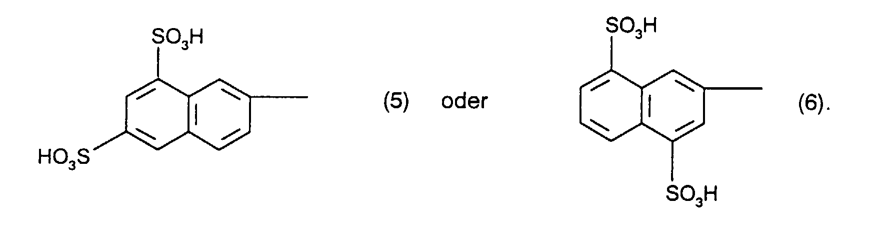

Als Reste D der Formel (3) sind ferner solche der Formel 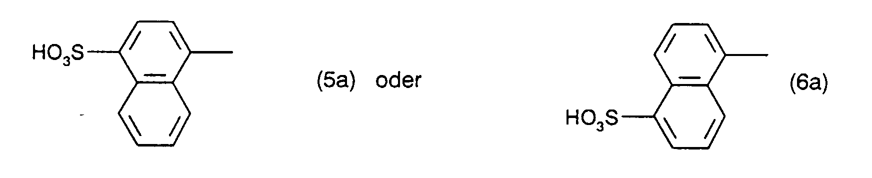 von Interesse.

Besonders bevorzugt als einen Rest D der Formel (3) enthaltende Reaktivfarbstoffe sind solche der Formel 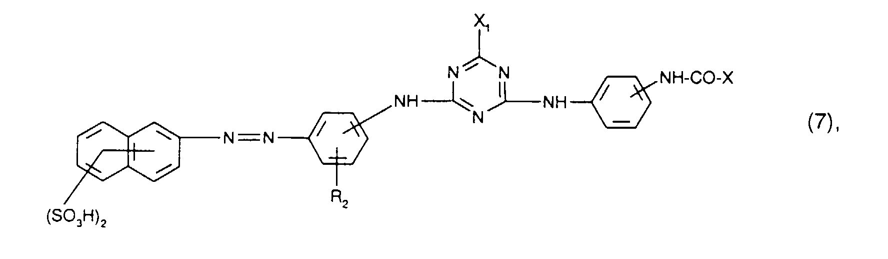 worin R₂ Wasserstoff, C₁-C₄-Alkyl, C₁-C₄-Alkoxy, C₂-C₄-Alkanoylamino, Ureido oder Halogen, insbesondere C₁-C₄-Alkyl, C₁-C₄-Alkoxy, C₂-C₄-Alkanoylamino, Ureido oder Halogen, und vorzugsweise C₁-C₄-Alkyl, C₁-C₄-Alkoxy, C₂-C₄-Alkanoylamino oder Ureido ist, X₁ Fluor oder insbesondere Chlor ist und für X die oben angegebenen Bedeutungen und Bevorzugungen gelten.

Als einen Rest D der Formel (3) enthaltende Reaktivfarbstoffe sind weiterhin solche der Formel 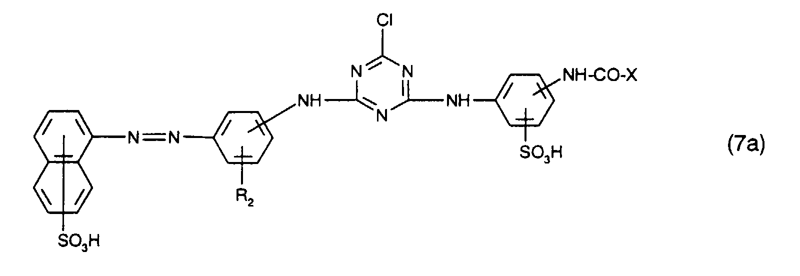 von Interesse, worin R₂ Wasserstoff, C₁-C₄-Alkyl, C₁-C₄-Alkoxy, C₂-C₄-Alkanoylamino, Ureido oder Halogen, insbesondere C₁-C₄-Alkyl, C₁-C₄-Alkoxy, C₂-C₄-Alkanoylamino, Ureido oder Halogen, und vorzugsweise C₁-C₄-Alkyl, C₁-C₄-Alkoxy, C₂-C₄-Alkanoylamino oder Ureido ist, und für X die oben angegebenen Bedeutungen und Bevorzugungen gelten. Der Rest R₂ ist hierbei bevorzugt in ortho-Stellung, relativ zur Azobrücke, gebunden. Die Sulfogruppe des Naphthalinrings ist hierbei vorzugsweise in 4- oder 5-Stellung gebunden.

Ganz besonders bevorzugt als einen Rest D der Formel (3) enthaltende Reaktivfarbstoffe sind solche der Formeln 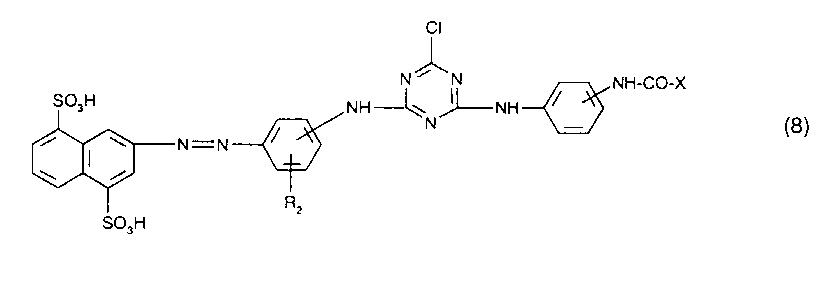 und 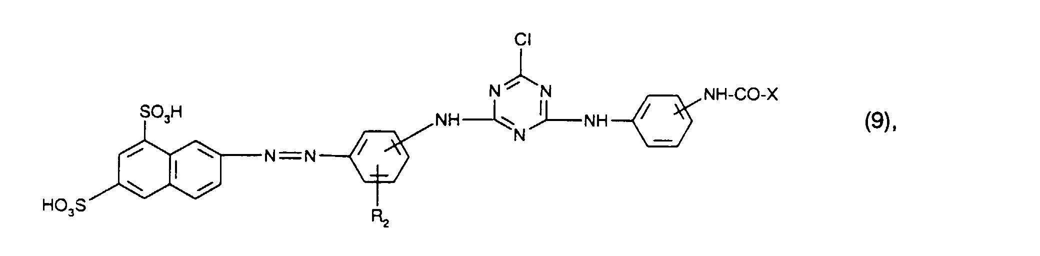 worin für R₂ die unter Formel (7) angegebenen Bedeutungen und Bevorzugungen gelten, und für X die oben angegebenen Bedeutungen und Bevorzugungen gelten.

Ganz besonders wichtig als einen Rest D der Formel (3) enthaltende Reaktivfarbstoffe sind solche der Formeln 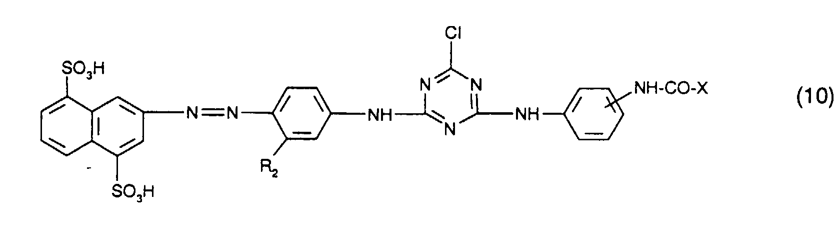 und 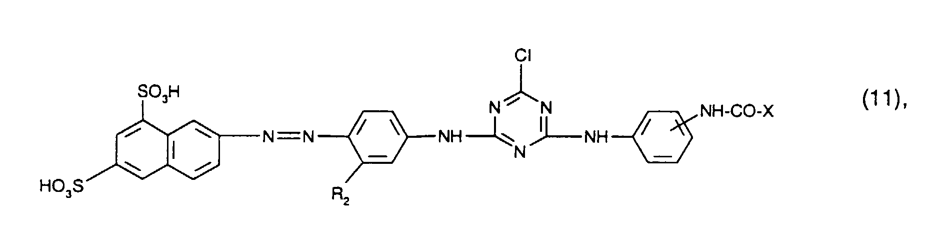 worin für R₂ die unter Formel (7) angegebenen Bedeutungen und Bevorzugungen gelten, und für X die oben angegebenen Bedeutungen und Bevorzugungen gelten.

Besonders bevorzugt als einen Rest D der Formel (4) enthaltende Reaktivfarbstoffe sind solche der Formel 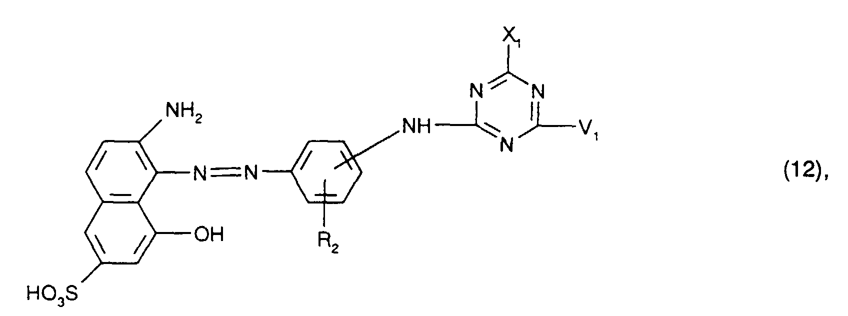 worin R₂ Wasserstoff, C₁-C₄-Alkyl, C₁-C₄-Alkoxy, C₂-C₄-Alkanoylamino, Ureido, Halogen oder Sulfo, insbesondere Wasserstoff oder Sulfo, X₁ Fluor oder insbesondere Chlor ist und für V₁ die oben angegebenen Bedeutungen und Bevorzugungen gelten.

Ganz besonders bevorzugt als einen Rest D der Formel (4) enthaltende Reaktivfarbstoffe sind solche der Formel 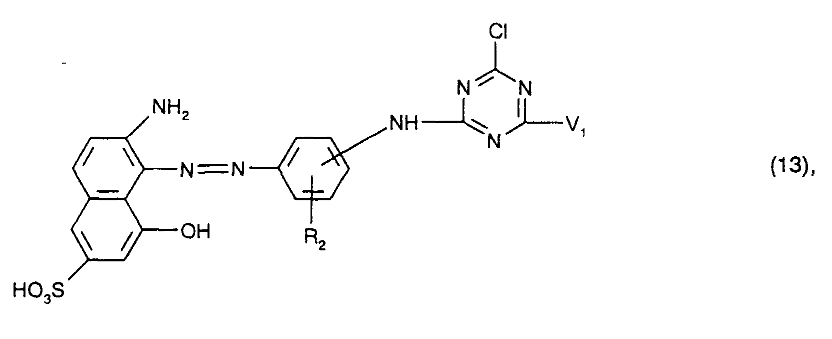 worin für R₂ die unter Formel (12) angegebenen Bedeutungen und Bevorzugungen gelten und für V₁ die oben angegebenen Bedeutungen und Bevorzugungen gelten.

Ganz besonders wichtig als einen Rest D der Formel (4) enthaltende Reaktivfarbstoffe sind solche der Formel 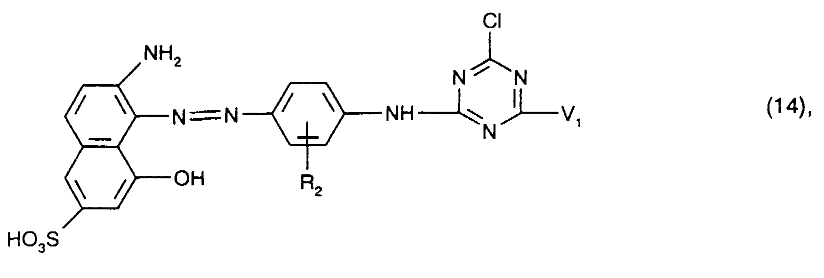 worin für R₂ die unter Formel (12) angegebenen Bedeutungen und Bevorzugungen gelten und für V₁ die oben angegebenen Bedeutungen und Bevorzugungen gelten.

Gegenstand der vorliegenden Erfindung ist ferner ein Verfahren zur Herstellung der Reaktivfarbstoffe der Formel (1), welches dadurch gekennzeichnet ist, dass man Verbindungen der Formeln 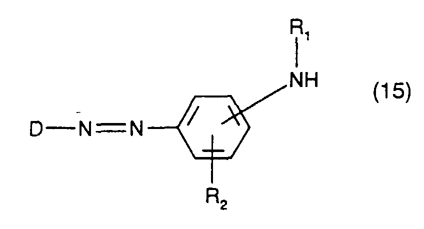 und

H-V₁ (16)

mit Cyanurchlorid oder Cyanurfluorid umsetzt und gegebenenfalls eine Umwandlungsreaktion anschliesst, wobei R₁, R₂, D und V₁ die oben unter Formel (1) angegebenen Bedeutungen haben.

Da die einzelnen oben angegebenen Verfahrensschritte in unterschiedlicher Reihenfolge, gegebenenfalls auch gleichzeitig, ausgeführt werden können, sind verschiedene Verfahrensvarianten möglich. Im allgemeinen führt man die Umsetzung schrittweise durch, wobei sich die Reihenfolge der einfachen Reaktionen zwischen den einzelnen Reaktionskomponenten vorteilhafterweise nach den besonderen Bedingungen richtet. So wird z.B. eine Verbindung der Formel (15) mit Cyanurchlorid oder Cyanurfluorid umgesetzt und das erhaltene Produkt anschliessend mit einer Verbindung der Formel (16) kondensiert. Ferner kann z.B. eine Verbindung der Formel (16) mit Cyanurchlorid oder Cyanurfluorid umgesetzt werden und das erhaltene Produkt anschliessend mit einer Verbindung der Formel (15) kondensiert werden.

Die einzelnen Kondensationsreaktionen erfolgen z.B. gemäss an sich bekannter Verfahren, in der Regel in wässriger Lösung, bei einer Temperatur von z.B. 0 bis 50°C, insbesondere 0 bis 10°C, und einem pH-Wert von z.B. 3 bis 10, insbesondere 3 bis 7.

Ausserdem können im Anschluss an die Synthese Umwandlungsreaktionen, wie z.B. eine Eliminierungsreaktion, ausgeführt werden. Beispielsweise kann man Reaktivfarbstoffe der Formel (1), welche Sulfatoäthylsulfonylreste oder α,β-Dihalogenpropionylaminoreste enthalten, mit einer Base, wie z.B. Natriumhydroxid, behandeln, wobei die Sulfatoäthylsulfonylreste in Vinylsulfonylreste und die α,β-Dihalogenpropionylaminoreste in α-Halogenacryloylaminoreste übergehen.

Die Verbindungen der Formeln (15) und (16) sind bekannt oder können in Analogie zu bekannten Verbindungen hergestellt werden.

Die erfindungsgemässen Reaktivfarbstoffe der Formel (1) liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Reaktivfarbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane und cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose.

Bevorzugt ist das Färben oder Bedrucken von natürlichen Polyamidfasermaterialien wie z.B. Wolle, wie auch von synthetischen Polyamidfasermaterialien, wie z.B. Polyamid 6 oder Polyamid 6.6. Weiterhin sind die erfindungsgemässen Reaktivfarbstoffe geeignet zum Färben oder Bedrucken von Woll- und synthetischen Polyamid-Mischgeweben oder -Garnen. Besonders bevorzugt ist das Färben oder Bedrucken von natürlichen Polyamidfasermaterialien, insbesondere von Wolle.

Das genannte Textilmaterial kann dabei in den verschiedensten Verarbeitungsformen vorliegen, wie z.B. als Faser, Garn, Gewebe oder Gewirke und insbesondere in Form von Teppichen.

Die erfindungsgemässen Reaktivfarbstoffe lassen sich auf verschiedene Weise auf das Fasermaterial applizieren und auf der Faser fixieren, insbesondere in Form von wässrigen Farbstofflösungen und -druckpasten, wobei das Färben, insbesondere nach dem Ausziehverfahren, bevorzugt ist.

Die erfindungsgemässen Reaktivfarbstoffe zeichnen sich durch hohe Reaktivität, gutes Fixiervermögen und ein gutes Ausziehverhalten aus. Die erfindungsgemässen Reaktivfarbstoffe eignen sich auch besonders zum Druck, vor allem zum Bedrucken von stickstoffhaltigen Fasern. Weiterhin sind die erfindungsgemässen Reaktivfarbstoffe gut mit anderen Farbstoffen kombinierbar.

Die mit den erfindungsgemässen Reaktivfarbstoffen hergestellten Färbungen und Drucke besitzen eine gute Lichtechtheit und sehr gute Nassechtheitseigenschaften, wie Wasch-, Wasser-, Seewasser-, Ueberfärbe- und Schweissechtheiten. Es werden faser- und flächenegale Färbungen erhalten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Beispiel 1:

a) 8 Teile einer Verbindung, welche in Form der freien Säure der Formel 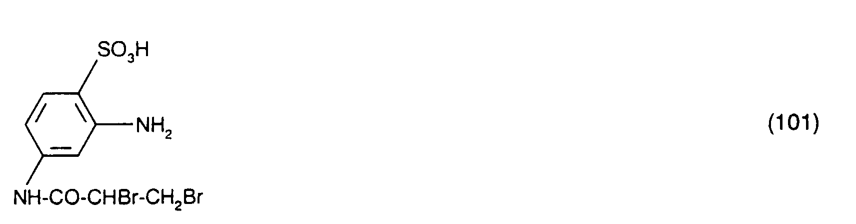 entspricht, werden in 100 Teilen Wasser verrührt, durch Zugabe von 0,35 Teilen Na₂HPO₄·12H₂O auf einen pH-Wert von 6 gestellt und auf eine Temperatur von 0°C abgekühlt. Zu der so erhaltenen Suspension lässt man innerhalb von 10 bis 15 Minuten eine Lösung aus 3,87 Teilen Cyanurchlorid und 50 Teilen Aceton zutropfen, wobei der pH durch Zugabe wässriger Natriumhydroxidlösung bei einem Wert von 3 gehalten wird. Es wird eine Stunde bei einer Temperatur von 0 bis 2°C und einem pH-Wert von 3 nachgerührt. Man erhält eine Suspension, welche die in Form der freien Säure angegebene Verbindung der Formel 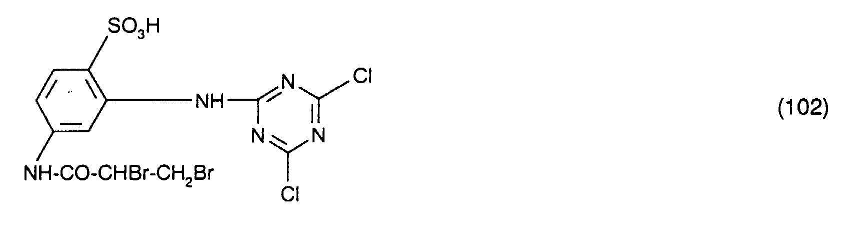 enthält.
b) 6,5 Teile einer Verbindung, welche in Form der freien Säure der Formel 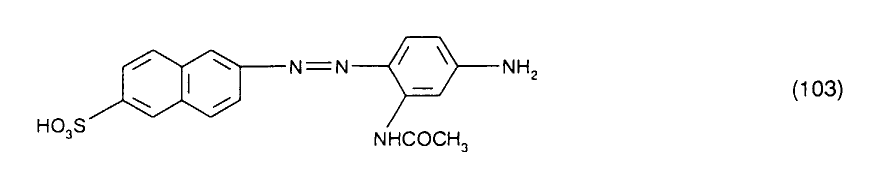 entspricht, werden in 158 Teilen Wasser und 9,1 Teilen 2-normaler Natriumhydroxidlösung bei Raumtemperatur und einem pH-Wert von 8 bis 8,5 gelöst. Diese Lösung wird anschliessend innerhalb von 30 Minuten zu der wie oben unter a) angegeben erhaltenen Lösung getropft, wobei der pH durch Zugabe wässriger Natriumhydroxidlösung bei einem Wert von 6 gehalten wird. Es wird über Nacht bei Raumtemperatur und einem pH-Wert von 6 bis 6,5 gerührt. Nach Zugabe von 5 Gew.-% Natriumchlorid wird weitere zwei Stunden nachgerührt, der erhaltene Farbstoff abfiltriert, dieser mit 250 Teilen einer 10%-igen, wässrigen Natriumchloridlösung nachgewaschen und bei einer Temperatur von 50 bis 60°C getrocknet. Man erhält einen Farbstoff, welcher in Form der freien Säure der Verbindung der Formel 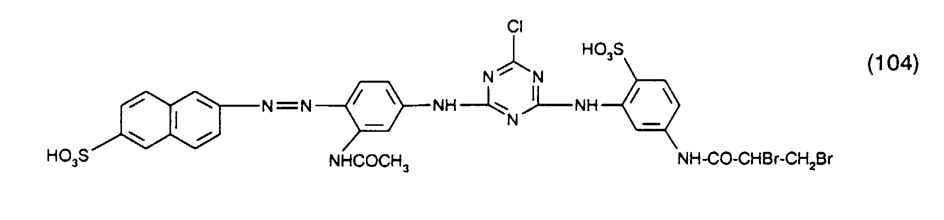 entspricht. Der Farbstoff der Formel (104) färbt Wolle und synthetisches Polyamidfasermaterial in gelben Farbtönen.

Beispiele 2 bis 8: In analoger Weise zu den Angaben in Beispiel 1 können die in der folgenden Tabelle 1 in Spalte 2 in Form der freien Säure angegebenen Farbstoffe erhalten werden, welche Wolle und synthetisches Polyamidfasermaterial in den in Spalte 3 angegebenen Farbtönen färben. Im Falle der Farbstoffe gemäss den Beispielen 4 und 5 erfolgt die erste Kondensation bei einem pH-Wert von ca. 6 und einer Temperatur von ca. 10°C.

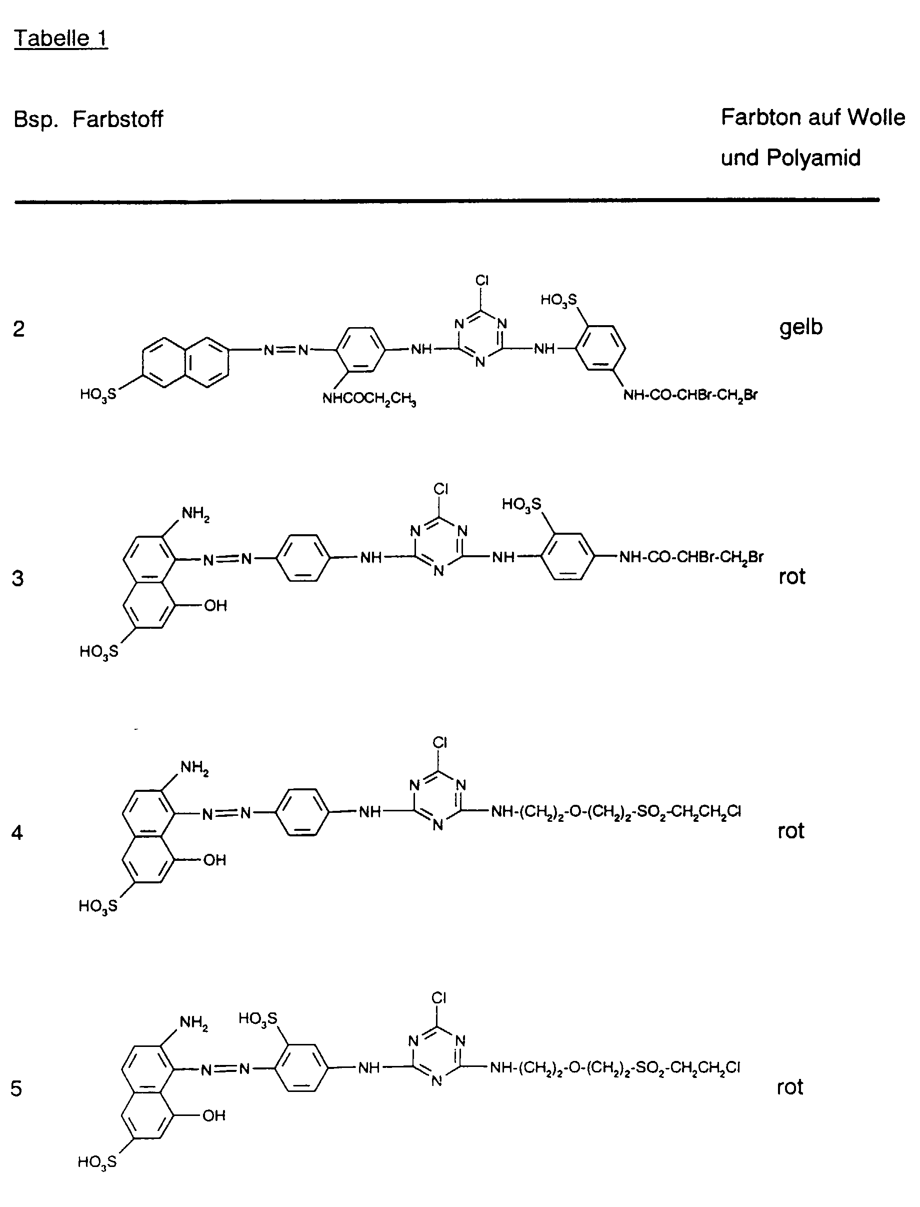

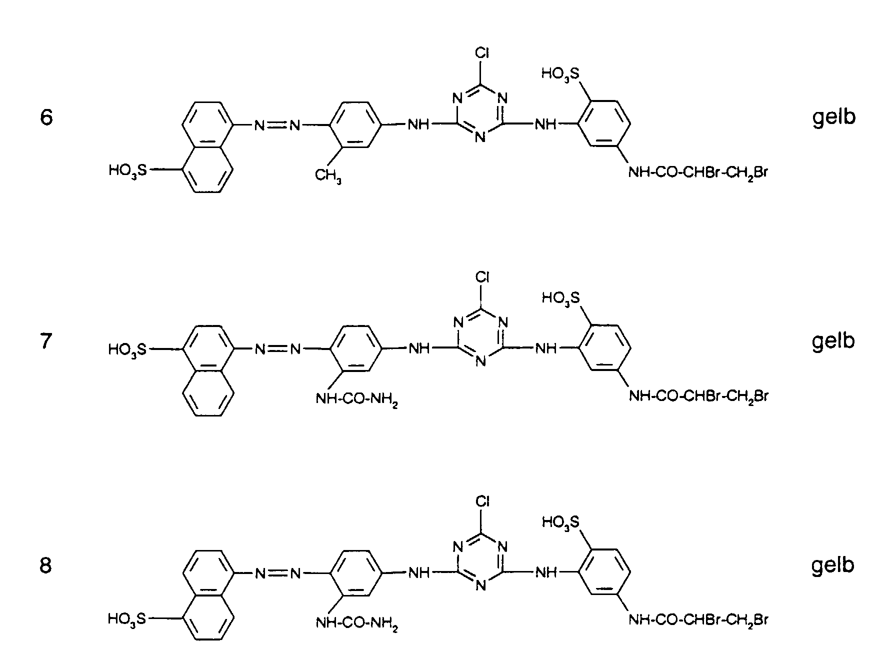

### Beispiel 9:

a) 4,75 Teile Cyanurchlorid werden innerhalb von 15 Minuten bei einer Temperatur von 0 bis 2°C in einer Mischung aus 47 Teilen Eis, 23 Teilen Wasser und 0,025 Teilen Na₂HPO₄·12H₂O suspendiert. Hierzu wird anschliessend eine 30 bis 35°C warme Lösung aus 300 Teilen Wasser und 11,6 Teilen der Verbindung der Formel 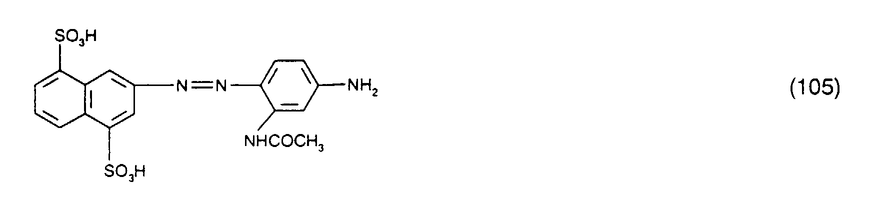 getropft, wobei die Temperatur bei 0 bis 2°C und der pH durch Zugabe einer wässrigen Natriumhydroxidlösung bei einem Wert von 3 gehalten wird. Es wird dann noch eine Stunde bei diesen Bedingungen nachgerührt. Man erhält eine Lösung, welche die in Form der freien Säure angegebene Verbindung der Formel 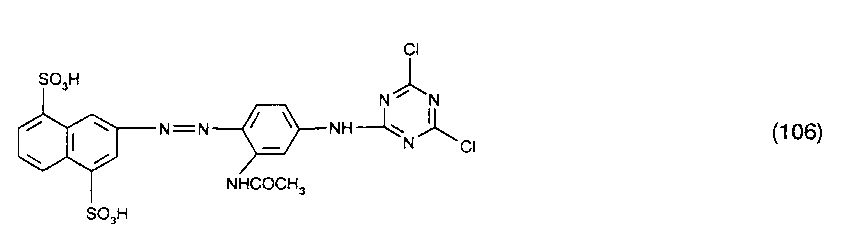 enthält.
b) 8,9 Teile der Verbindung der Formel 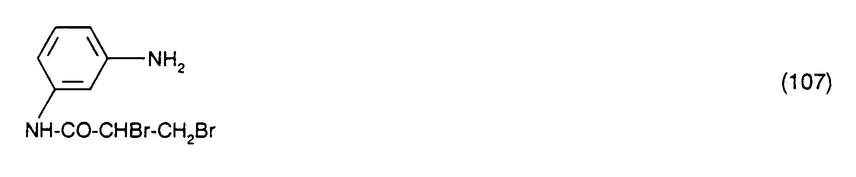 werden in einer Mischung aus 50 Teilen Wasser und 75 Teilen Aceton gelöst und innerhalb von 60 Minuten zu der wie oben unter a) angegeben erhaltenen Lösung gegeben, wobei man den pH unterhalb eines Wertes von 4,6 hält und die Temperatur nicht höher als 10°C steigen lässt. Anschliessend wird die Reaktionsmischung 3 Stunden bei einem pH-Wert von 4,5 bis 4,6 und einer Temperatur von 10°C gerührt, wobei der pH durch Zugabe einer 10%-igen, wässrigen Natriumhydrogencarbonatlösung konstant gehalten wird. Nach Zugabe von Natriumchlorid wird über Nacht bei Raumtemperatur gerührt, der Farbstoff abfiltriert, mit wässriger Natriumchloridlösung gewaschen und bei einer Temperatur von 40°C getrocknet. Man erhält einen Farbstoff, welcher in Form der freien Säure der Verbindung der Formel 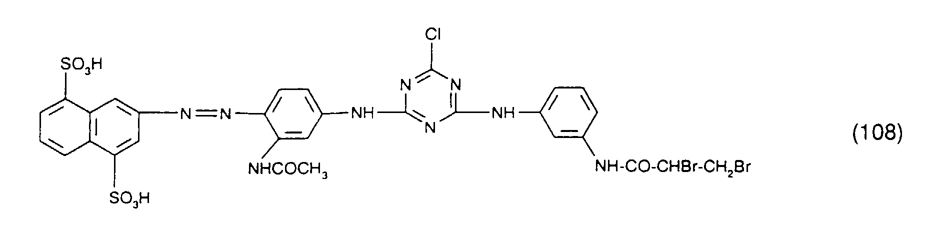 entspricht. Der Farbstoff der Formel (108) färbt Wolle und synthetisches Polyamidfasermaterial in gelben Farbtönen.

Beispiele 10 bis 18: In analoger Weise zu den Angaben in Beispiel 9 können die in der folgenden Tabelle 2 in Spalte 2 in Form der freien Säure angegebenen Farbstoffe erhalten werden, welche Wolle und synthetisches Polyamidfasermaterial in den in Spalte 3 angegebenen Farbtönen färben.

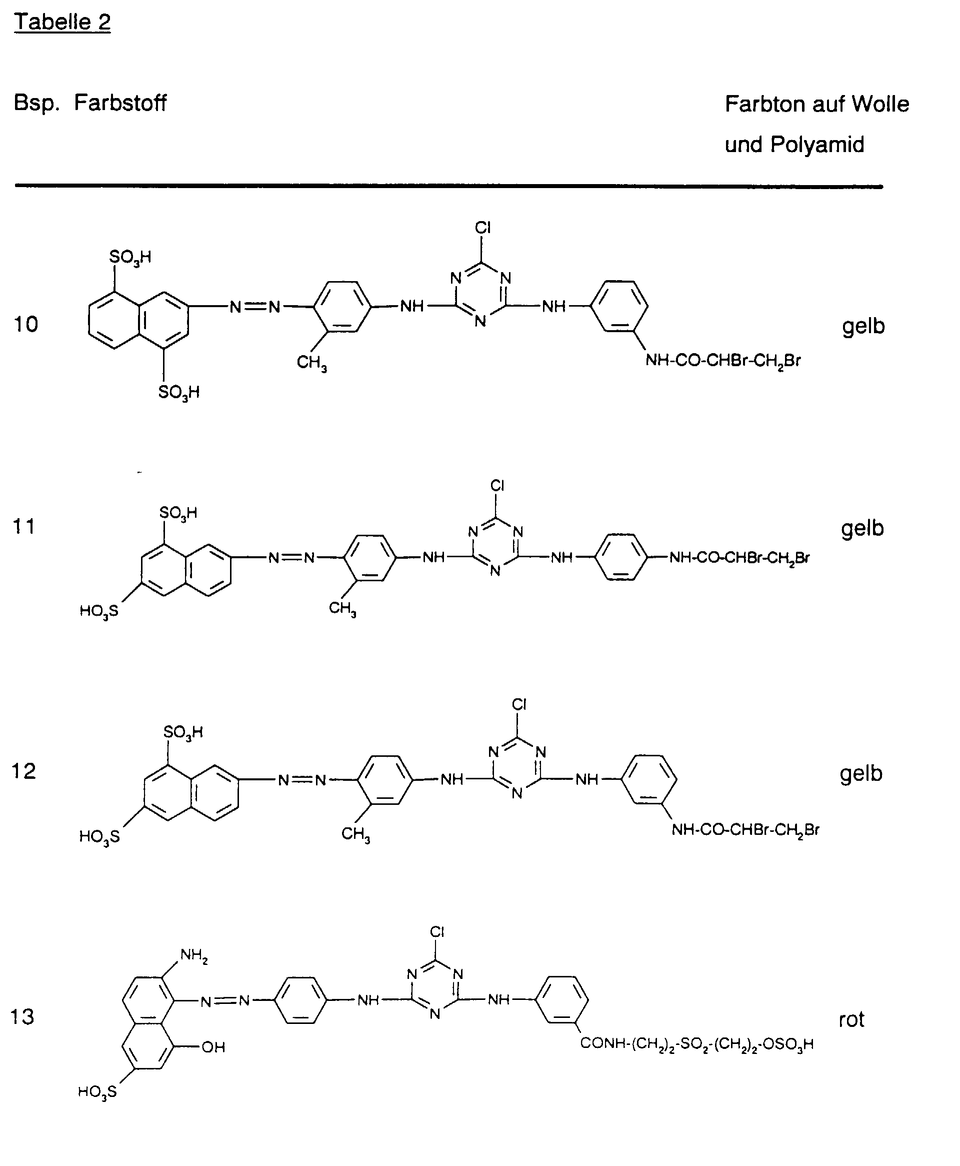

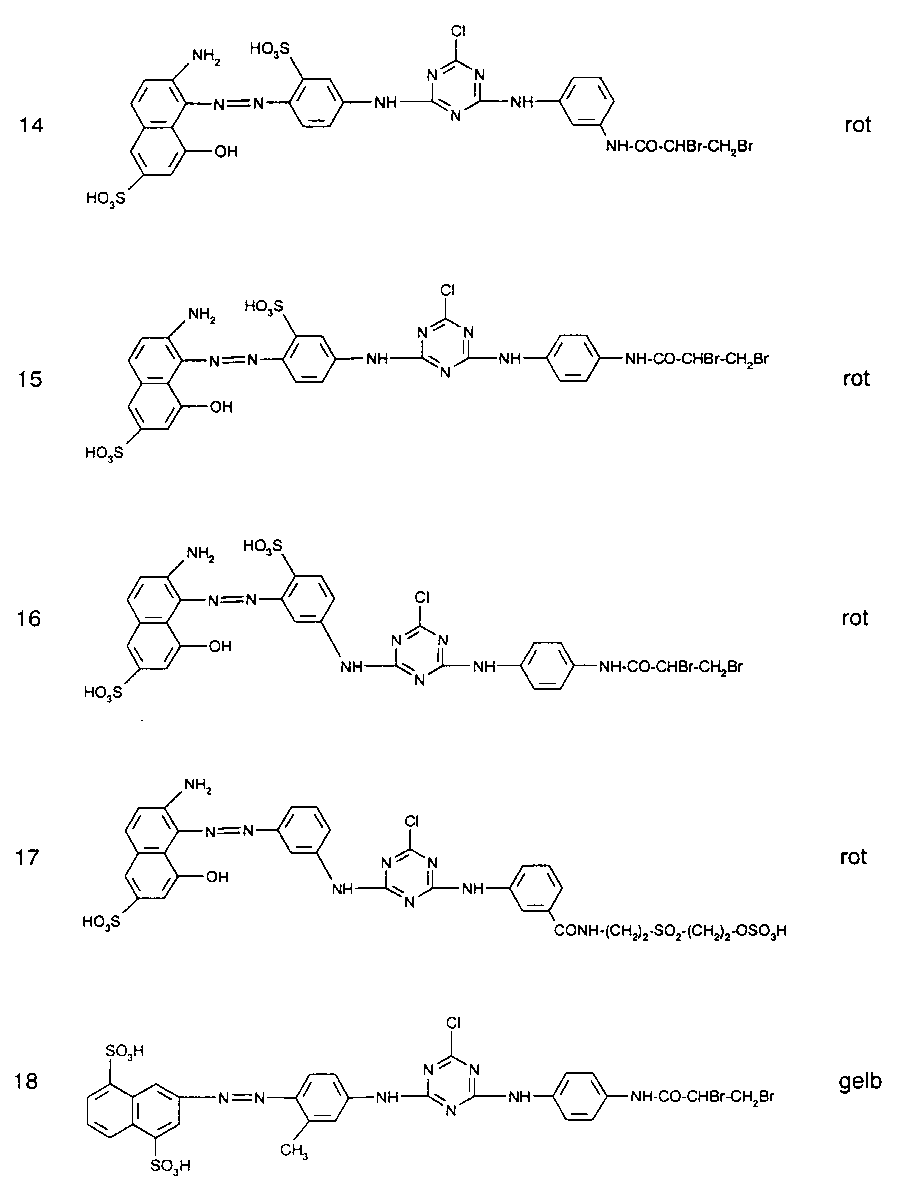

### Beispiel 19:

a) 36,8 Teile Cyanurchlorid werden bei einer Temperatur von 8°C und einem pH-Wert von ca. 6 in 250 Teilen Eis, 150 Teilen Wasser und 0,2 Teilen Na₂HPO₄·12H₂O suspendiert. Anschliessend wird innerhalb von 1,5 Stunden eine Lösung aus 45,3 Teilen einer Verbindung der Formel

   H₂N-(CH₂)₂-O-(CH₂)₂-SO₂-CH₂CH₂Cl (109)

   in 150 Teilen Wasser zudosiert, wobei der pH durch Zugabe wässriger, 10%-iger Natriumhydrogencarbonatlösung bei einem Wert von 6,4 gehalten wird. Es wird eine Stunde bei einer Temperatur von 0 bis 2°C und einem pH-Wert von 6,4 gerührt. Es wird ca. 4 Stunden bei einer Temperatur von 8 bis 10°C und einem pH-Wert von 6,4 nachgerührt. Nach Filtration und Lufttrocknung erhält man eine Verbindung der Formel 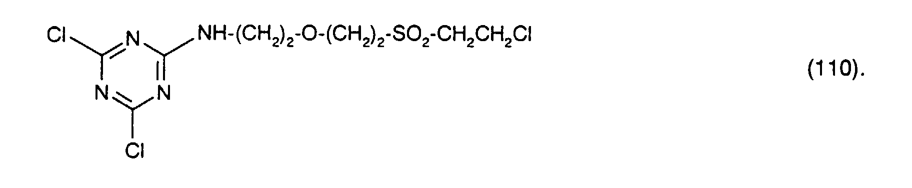
b) 22 Teile der wie oben unter a) angegeben erhältlichen Verbindung der Formel (110) werden bei einer Temperatur von 10°C und einem pH-Wert von 2,3 in 100 Teile Eiswasser suspendiert. Anschliessend wird innerhalb von 15 Minuten eine Lösung aus 10,2 Teilen einer Verbindung der Formel 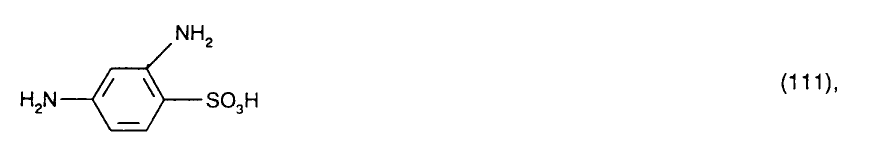 100 Teilen Wasser und 26 Teilen einer 2-normalen, wässrigen Natriumhydroxidlösung zugegeben, wobei sich eine Temperatur von 35 bis 40°C einstellt und der pH durch Zugabe von wässriger, 10%-iger Natriumhydrogencarbonatlösung bei einem Wert von ca. 7 gehalten wird. Es wird 6 Stunden unter diesen Bedingungen gerührt. Die Reaktionsmischung wird mittels Salzsäure (16%) auf einen pH-Wert von 1 bis 1,2 gestellt. Nach Zugabe von Natriumchlorid wird das Produkt abfiltriert und mit wässriger Natriumchloridlösung gewaschen. Man erhält ein feuchtes Pressgut, welches die in Form der freien Säure angegebene Verbindung der Formel 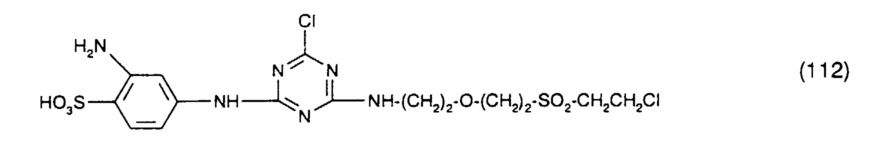 enthält.
c) 17,5 Teile des wie oben unter b) angegeben erhältlichen Pressguts werden bei einer Temperatur von 0 bis 2°C in 175 Teile Wasser suspendiert und der pH wird mittels Salzsäure (32%) auf einen Wert von 1 gestellt. Bei einer Temperatur von 5 bis 10°C wird innerhalb von 90 Minuten durch Zugabe von 3,8 Teilen einer wässrigen, 4-normalen Natriumnitritlösung diazotiert und überschüssiges Nitrit wird anschliessend durch Zugabe von Sulfaminsäure zerstört.
d) Zur Herstellung einer Suspension der Kupplungskomponente werden 3,7 Teile der Verbindung der Formel 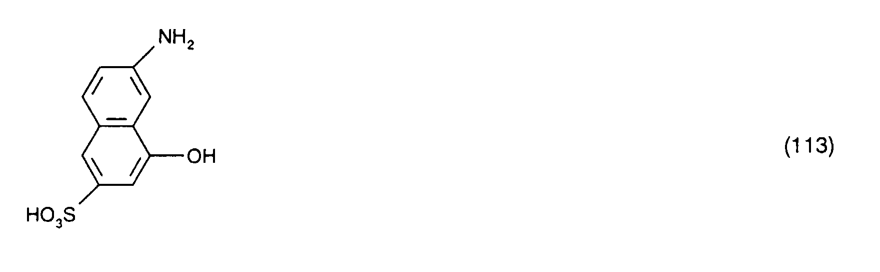 bei Raumtemperatur und einem pH-Wert von ca. 8,4 in 50 Teilen Wasser und 3,6 Teilen einer wässrigen, 15%-igen Natriumhydroxidlösung gelöst. Anschliessend wird mit Essigsäure ein pH-Wert von 3 bis 3,5 eingestellt und es wird auf eine Temperatur von 0 bis 5°C abgekühlt. Zu der so erhaltenen Suspension wird die wie oben unter c) angegeben erhältliche Suspension der Diazokomponente innerhalb von 30 Minuten zugegeben. Hierbei wird der pH mittels einer wässrigen, gesättigten Natriumacetatlösung bei einem Wert von 3,5 gehalten. Anschliessend wird eine Stunde bei einem pH-Wert von 3,5 und einer Temperatur von 0 bis 5°C nachgerührt. Nach Zugabe von Natriumchlorid wird noch 2 Stunden nachgerührt, der Farbstoff abfiltriert, mit wässriger Natriumchloridlösung gewaschen und bei einer Temperatur von 30°C getrocknet. Man erhält einen Farbstoff, welcher in Form der freien Säure der Verbindung der Formel 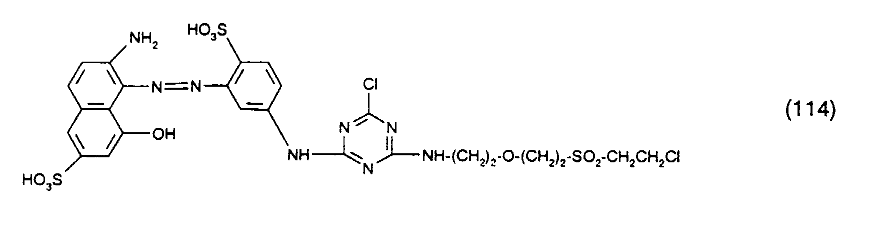 entspricht. Der Farbstoff der Formel (114) färbt Wolle und synthetisches Polyamidfasermaterial in roten Farbtönen.

Beispiel 20: 3,06 Teile des gemäss Beispiel 12 erhältlichen Farbstoffs werden in 100 Teilen Wasser bei einer Temperatur von 60 bis 70°C verrührt. Der pH wird durch Zugabe einer wässrigen, 1-normalen Natriumhydroxidlösung bei einem Wert von 7 gehalten und es wird insgesamt 135 Minuten unter diesen Bedingungen acryliert. Anschliessend wird auf Raumtemperatur abgekühlt, nach Zugabe von Kaliumchlorid 30 Minuten nachgerührt, der erhaltene Farbstoff abfiltriert, dieser mit 100 Teilen einer wässrigen Kaliumchloridlösung nachgewaschen und bei einer Temperatur von 30°C getrocknet. Man erhält einen Farbstoff, welcher in Form der freien Säure der Verbindung der Formel 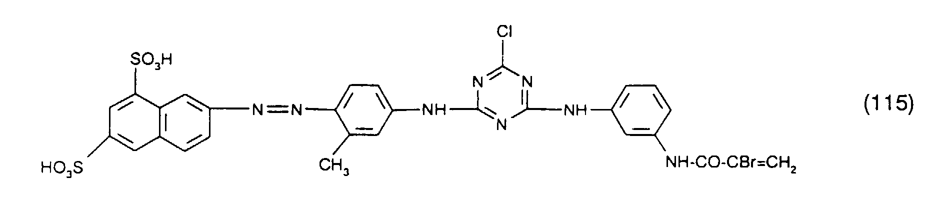 entspricht. Der Farbstoff der Formel (115) färbt Wolle und synthetisches Polyamidfasermaterial in gelben Farbtönen.

Beispiele 21 bis 36: In analoger Weise zu den Angaben in Beispiel 20 können die in der folgenden Tabelle 3 in Spalte 2 in Form der freien Säure angegebenen Farbstoffe erhalten werden, welche Wolle und synthetisches Polyamidfasermaterial in gelben Farbtönen färben. Im Falle der einen Rest der Formel -NH-(CH₂)₂-O-(CH₂)₂-SO₂-CH=CH₂ enthaltenden Farbstoffe erfolgt die Vinylierung bei einem pH-Wert von ca. 8 bis 10 und einer Temperatur von ca. 25°C.

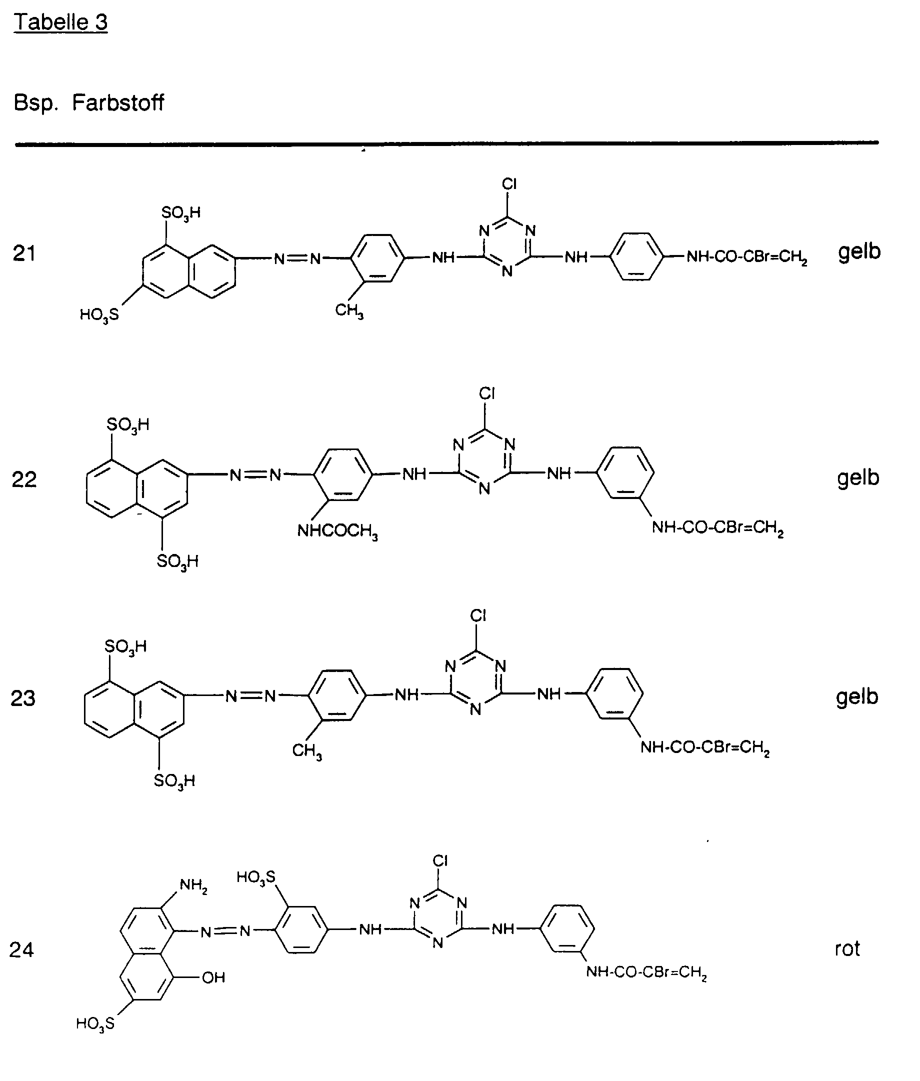

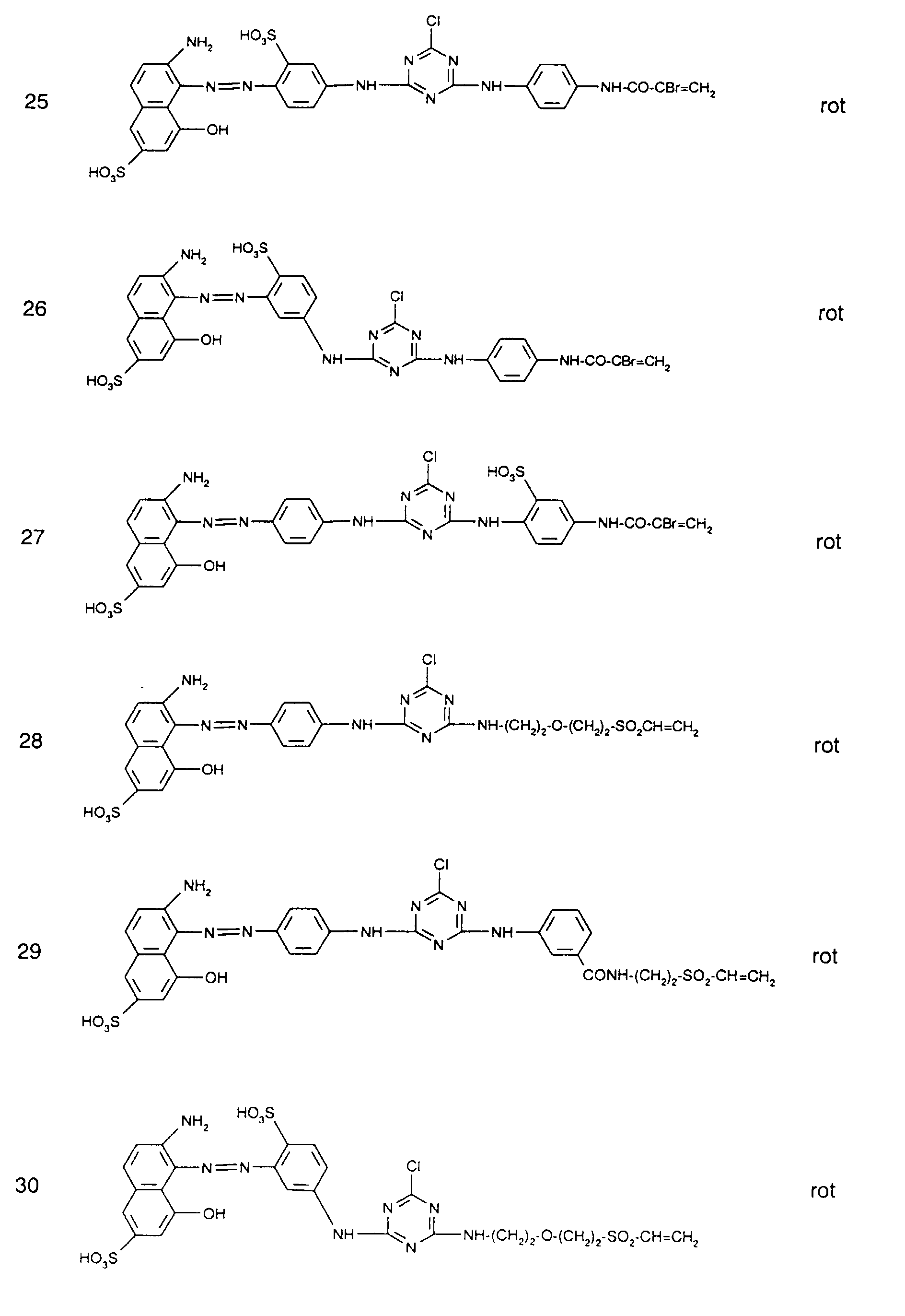

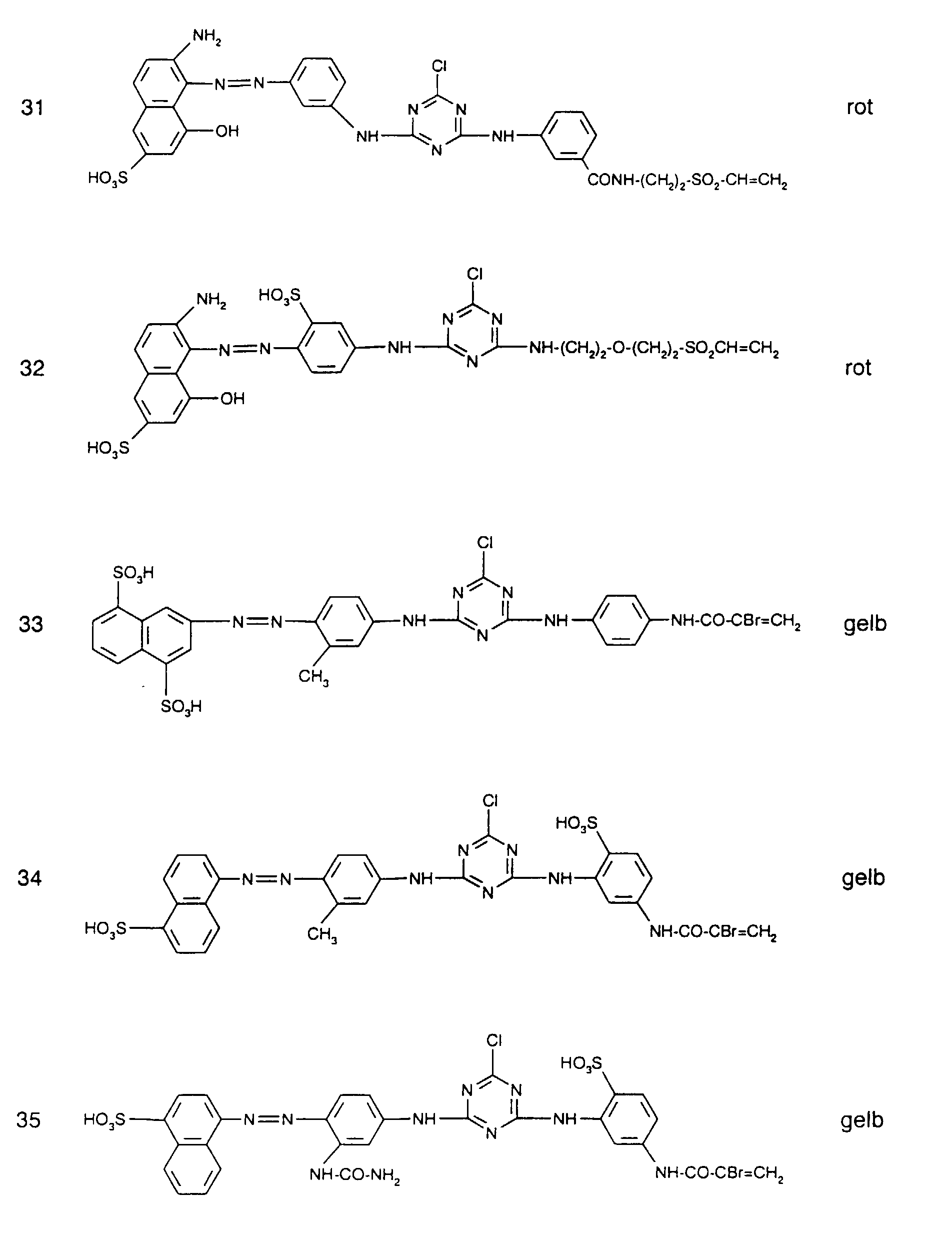

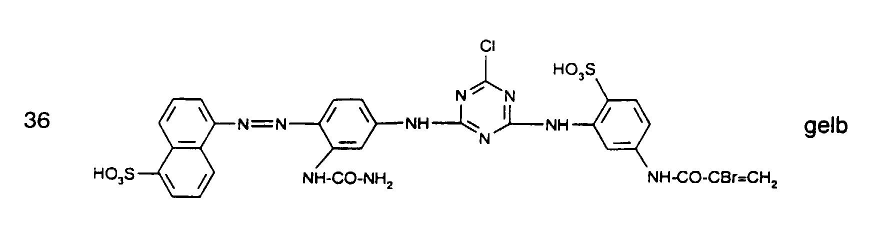

### Färbevorschrift

Es werden 0,1 Teile des Farbstoffs gemäss Beispiel 1 in 200 Teilen Wasser gelöst und 0,5 Teile Natriumsulfat, 0,1 Teile eines Egalisierhilfsmittels (basierend auf dem Kondensationsprodukt aus einem höheren aliphatischen Amin und Ethylenoxid) sowie 0,5 Teile Natriumacetat zugegeben. Dann wird der pH mit Essigsäure (80%) auf einen Wert von 5,5 gestellt. Das Färbebad wird 10 Minuten auf 50°C erwärmt und es werden dann 10 Teile eines Wollgewebes zugegeben. Man erwärmt innerhalb von ca. 50 Minuten auf eine Temperatur von 100°C und färbt 60 Minuten bei dieser Temperatur. Danach lässt man auf 90°C abkühlen und entnimmt das Färbegut. Das Wollgewebe wird mit warmem und kaltem Wasser gewaschen, anschliessend geschleudert und getrocknet. Man erhält eine gelbe Färbung, die gute Licht- und Nassechtheiten sowie eine gute Faseregalität aufweist.

## Patentansprüche

1. Reaktivfarbstoffe der Formel 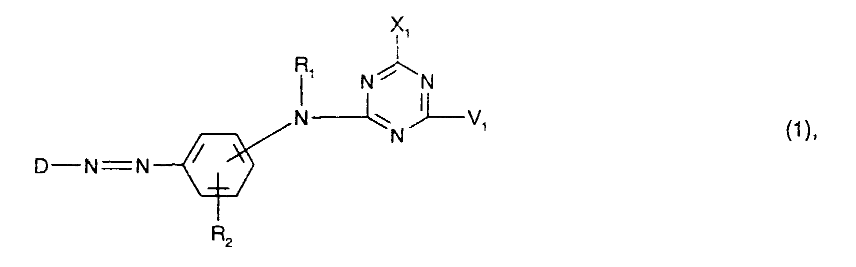 worin
R₁ Wasserstoff oder gegebenenfalls substituiertes C₁-C₄-Alkyl ist,
R₂ Wasserstoff, C₁-C₄-Alkyl, C₁-C₄-Alkoxy, C₂-C₄-Alkanoylamino, Ureido, Halogen oder Sulfo ist,
X₁ Fluor oder Chlor,
V₁ ein Rest der Formel
-NH-(CH₂)₂₋₃-O-(CH₂)₂₋₃-SO₂Z (2b), 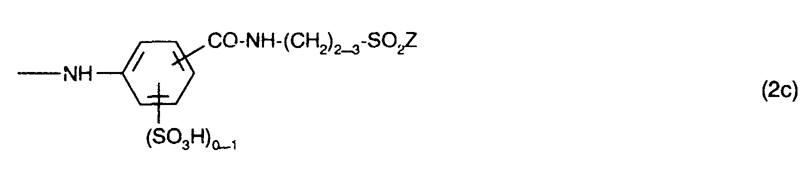
oder 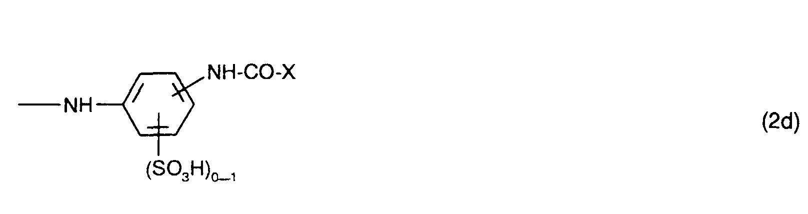 ist,
wobei
Z der Rest -CH=CH₂ oder -CH₂-CH₂-Y und Y eine Abgangsgruppe ist, und
X der Rest 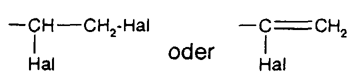 und Hal Halogen ist,
D ein Rest der Formel 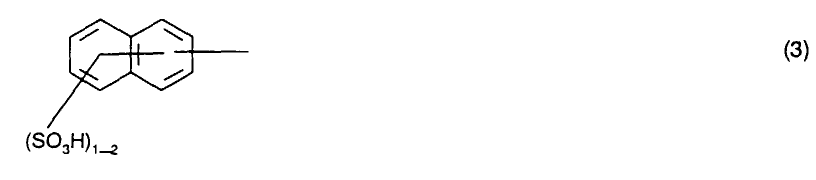 oder 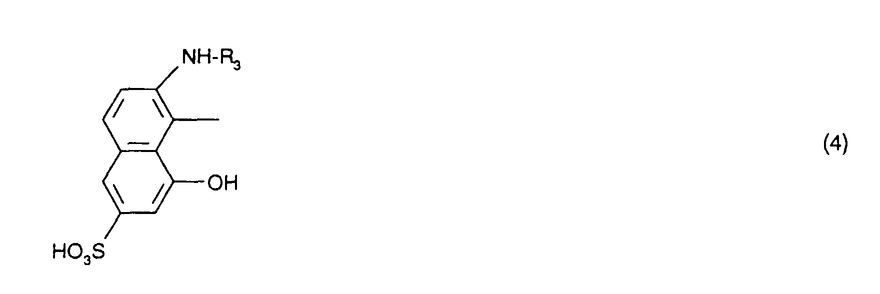 ist, worin R₃ Wasserstoff oder C₁-C₄-Alkyl ist, und
wobei die Reaktivfarbstoffe der Formel (1) nicht mehr als zwei Sulfogruppen enthalten, mit der Massgabe dass, falls D ein Rest der Formel (3) ist, V₁ einen Rest der Formel (2d) bedeutet.

2. Reaktivfarbstoffe gemäss Anspruch 1, dadurch gekennzeichnet, dass R₁ Wasserstoff oder gegebenenfalls durch Hydroxy, Sulfo oder Sulfato substituiertes C₁-C₄-Alkyl ist.

3. Reaktivfarbstoffe gemäss einem der Ansprüche 1 und 2, dadurch gekennzeichnet, dass R₁ Wasserstoff oder C₁-C₄-Alkyl, insbesondere Wasserstoff, ist.

4. Reaktivfarbstoffe gemäss einem der Ansprüche 1 bis 3, dadurch gekennzeichnet, dass R₃ Wasserstoff ist.

5. Reaktivfarbstoffe gemäss einem der Ansprüche 1 bis 4, dadurch gekennzeichnet, dass X₁ Chlor ist.

6. Reaktivfarbstoffe gemäss einem der Ansprüche 1 bis 5, dadurch gekennzeichnet, dass Y -Cl oder -OSO₃H ist.

7. Reaktivfarbstoffe gemäss einem der Ansprüche 1 bis 6, dadurch gekennzeichnet, dass Hal Chlor oder Brom, insbesondere Brom, ist.

8. Reaktivfarbstoffe gemäss einem der Ansprüche 1 bis 7, dadurch gekennzeichnet, dass der Rest D der Formel (3) zwei Sulfogruppen enthält.

9. Reaktivfarbstoffe gemäss Anspruch 1 der Formel 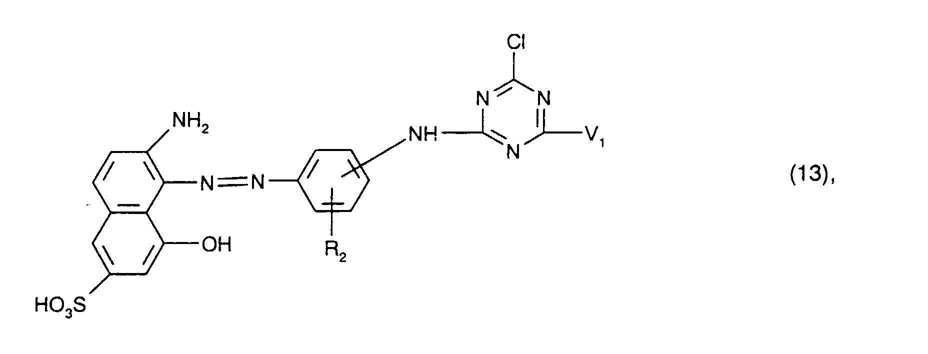 worin R₂ Wasserstoff, C₁-C₄-Alkyl, C₁-C₄-Alkoxy, C₂-C₄-Alkanoylamino, Ureido, Halogen oder Sulfo, insbesondere Wasserstoff oder Sulfo, ist und
V₁ die in Anspruch 1 angegebenen Bedeutungen hat.

10. Reaktivfarbstoffe gemäss Anspruch 1 der Formel 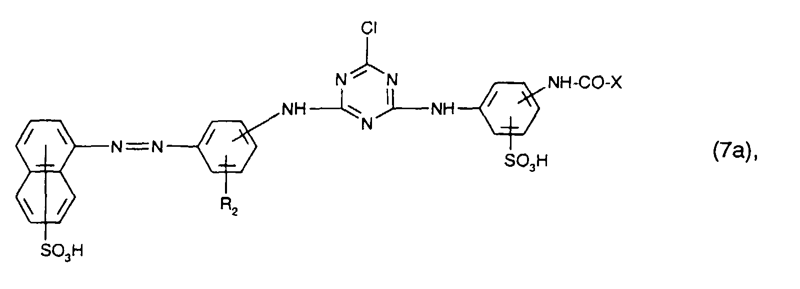 worin
R₂ Wasserstoff, C₁-C₄-Alkyl, C₁-C₄-Alkoxy, C₂-C₄-Alkanoylamino, Ureido oder Halogen, insbesondere C₁-C₄-Alkyl, C₁-C₄-Alkoxy, C₂-C₄-Alkanoylamino, Ureido oder Halogen, ist und
X die in Anspruch 1 angegebenen Bedeutungen hat.

11. Reaktivfarbstoffe gemäss Anspruch 1 der Formel 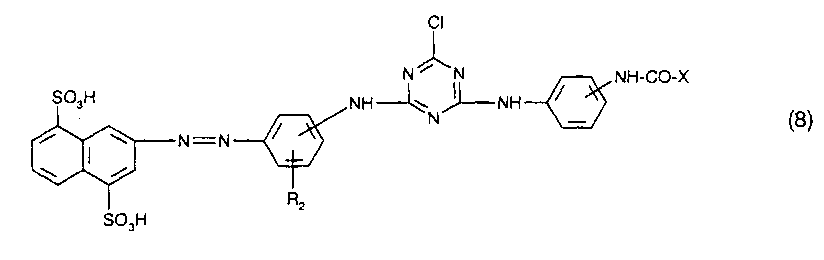 und 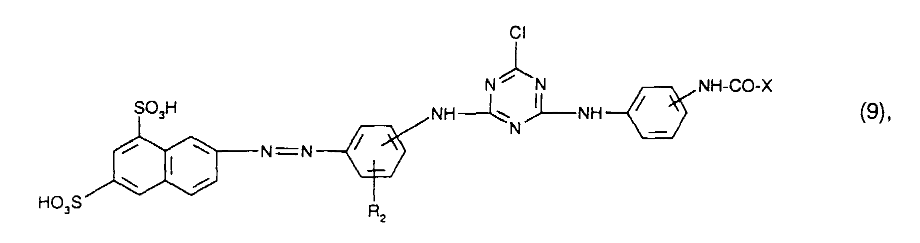 worin
R₂ Wasserstoff, C₁-C₄-Alkyl, C₁-C₄-Alkoxy, C₂-C₄-Alkanoylamino, Ureido oder Halogen, insbesondere C₁-C₄-Alkyl, C₁-C₄-Alkoxy, C₂-C₄-Alkanoylamino, Ureido oder Halogen, ist und
X die in Anspruch 1 angegebenen Bedeutungen hat.

12. Reaktivfarbstoffe gemäss einem der Ansprüche 1 bis 9, dadurch gekennzeichnet, dass V₁ ein Rest der Formel (2c) oder (2d) ist.

13. Reaktivfarbstoffe gemäss einem der Ansprüche 1 bis 9, dadurch gekennzeichnet, dass V₁ ein Rest der Formel (2d) ist.

14. Verfahren zur Herstellung von Reaktivfarbstoffen gemäss Anspruch 1, dadurch gekennzeichnet, dass man Verbindungen der Formeln 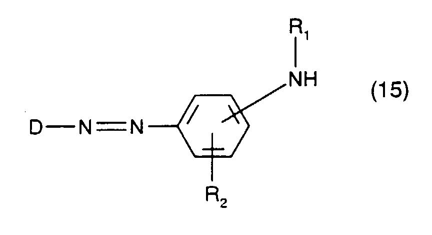 und
H-V₁ (16)
mit Cyanurchlorid oder Cyanurfluorid umsetzt und gegebenenfalls eine Umwandlungsreaktion anschliesst, wobei R₁, R₂, D und V₁ die in Anspruch 1 angegebenen Bedeutungen haben.

15. Verwendung der Reaktivfarbstoffe gemäss einem der Ansprüche 1 bis 13 bzw. der gemäss Anspruch 14 erhaltenen Reaktivfarbstoffe zum Färben oder Bedrucken von hydroxylgruppenhaltigen oder stickstoffhaltigen Fasermaterialien.

16. Verwendung gemäss Anspruch 15 zum Färben oder Bedrucken von natürlichem oder synthetischem Polyamidfasermaterial.

## Claims

1. A reactive dye of the formula 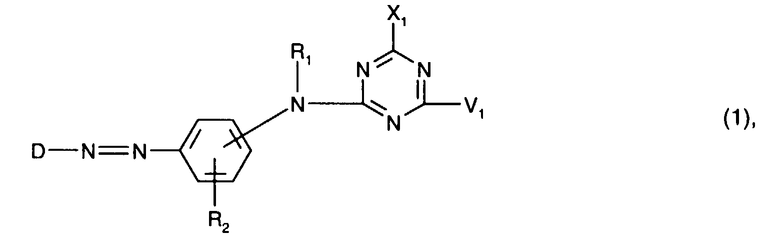 in which
R₁ is hydrogen or substituted or unsubstituted C₁-C₄alkyl,
R₂ is hydrogen, C₁-C₄alkyl, C₁-C₄alkoxy, C₂-C₄alkanoylamino, ureido, halogen or sulfo,
X₁ is fluorine or chlorine,
V₁ is a radical of the formula
-NH-(CH₂)₂₋₃-O-(CH₂)₂₋₃-SO₂Z (2b), 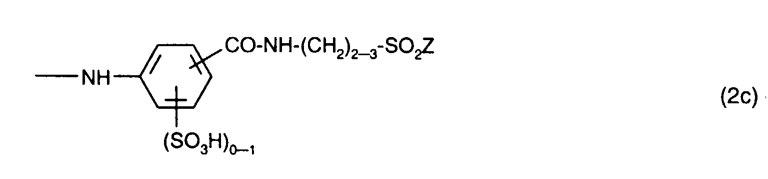
or 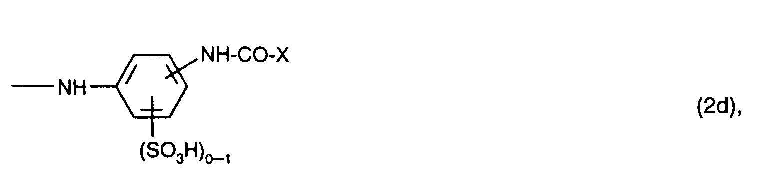 where
Z is the radical -CH=CH₂ or -CH₂-CH₂-Y and Y is a leaving group, and
X is the radical 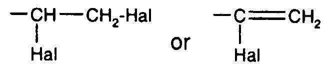 and Hal is halogen,
D is a radical of the formula 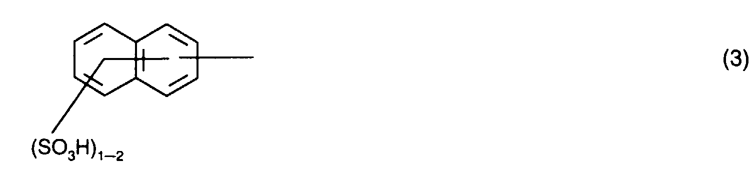 or 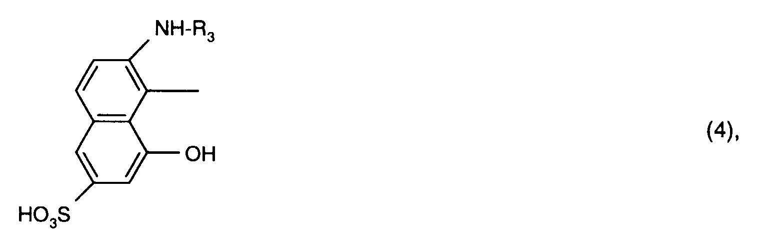 in which R₃ is hydrogen or C₁-C₄alkyl, and
where the reactive dyes of the formula (1) contain not more than two sulfo groups, with the proviso that, if D is a radical of the formula (3), V₁ is a radical of the formula (2d).

2. A reactive dye according to claim 1, in which
R₁ is hydrogen or C₁-C₄alkyl which is unsubstituted or substituted by hydroxyl, sulfo or sulfato.

3. A reactive dye according to either of claims 1 and 2, in which
R₁ is hydrogen or C₁-C₄alkyl, in particular hydrogen.

4. A reactive dye according to any one of claims 1 to 3, in which
R₃ is hydrogen.

5. A reactive dye according to any one of claims 1 to 4, in which
X₁ is chlorine,

6. A reactive dye according to any one of claims 1 to 5, in which
Y is -Cl or -OSO₃H.

7. A reactive dye according to any one of claims 1 to 6, in which
Hal is chlorine or bromine, in particular bromine.

8. A reactive dye according to any one of claims 1 to 7, in which the radical D of the formula (3) contains two sulfo groups.

9. A reactive dye according to claim 1, of the formula 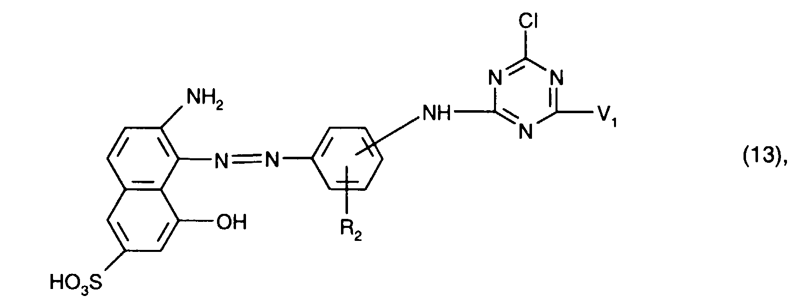 in which
R₂ is hydrogen, C₁-C₄alkyl, C₁-C₄alkoxy, C₂-C₄alkanoylamino, ureido, halogen or sulfo, in particular hydrogen or sulfo, and
V₁ is as defined in claim 1.

10. A reactive dye according to claim 1, of the formula 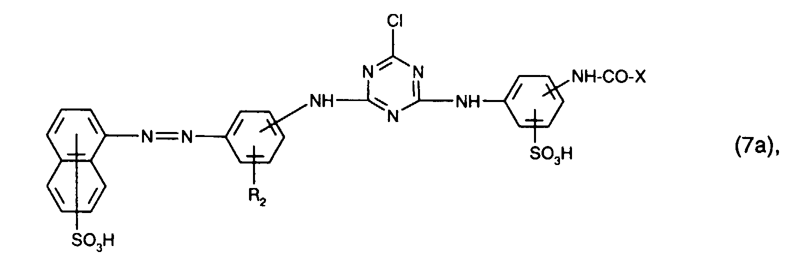 in which
R₂ is hydrogen, C₁-C₄alkyl, C₁-C₄alkoxy, C₂-C₄alkanoylamino, ureido or halogen, in particular C₁-C₄alkyl, C₁-C₄alkoxy, C₂-C₄alkanoylamino, ureido or halogen, and
X is as defined in claim 1.

11. A reactive dye according to claim 1, of the formula 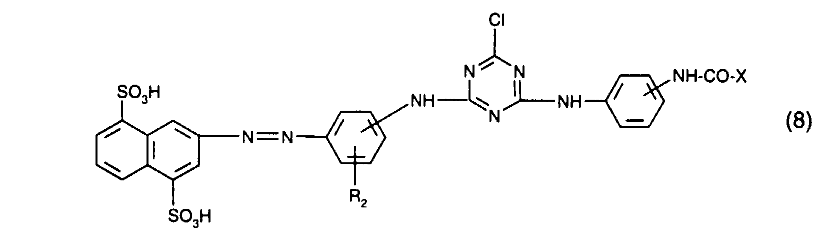 or 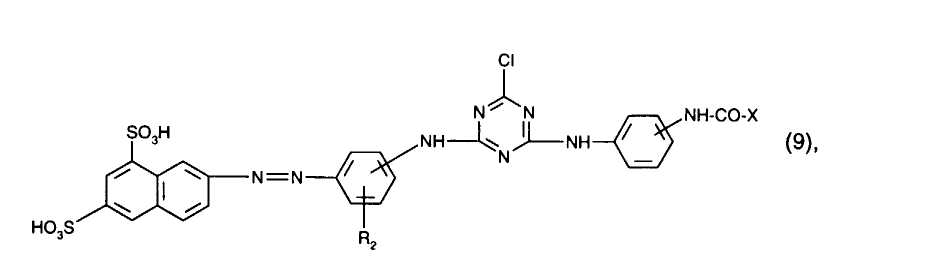 in which
R₂ is hydrogen, C₁-C₄alkyl, C₁-C₄alkoxy, C₂-C₄alkanoylamino, ureido or halogen, in particular C₁-C₄alkyl, C₁-C₄alkoxy, C₂-C₄alkanoylamino, ureido or halogen, and
X is as defined in claim 1.

12. A reactive dye according to any one of claims 1 to 9, in which
V₁ is a radical of the formula (2c) or (2d).

13. A reactive dye according to any one of claims 1 to 9, in which
V₁ is a radical of the formula (2d).

14. A process for the preparation of a reactive dye according to claim 1, which comprises reacting compounds of the formulae 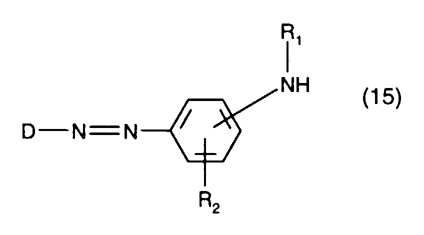 and
H-V₁ (16)
with cyanuric chloride or cyanuric fluoride and, if appropriate, subsequently carrying out a conversion reaction, where R₁, R₂, D and V₁ are as defined in claim 1.

15. The use of a reactive dye according to any one of claims 1 to 13 or of a reactive dye obtained according to claim 14 for dyeing or printing fibre materials containing hydroxyl groups or containing nitrogen.

16. The use according to claim 15 for dyeing or printing natural or synthetic polyamide fibre material.

## Revendications

1. Colorants réactifs de formule 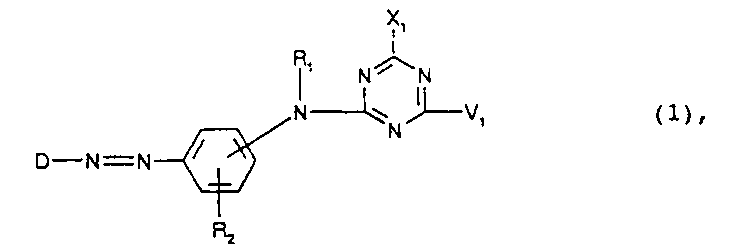 dans laquelle
R₁ représente un atome d'hydrogène ou un groupe alkyle en C₁-C₄ éventuellement substitué,
R₂ représente un atome d'hydrogène, des groupes alkyle en C₁-C₄, alkoxy en C₁-C₄, (alcanoyl en C₂-C₄)amino, uréido, halogène ou sulfo,
X₁ représente un atome de fluor ou de chlore,
V₁ représente un reste de formule
-NH-(CH₂)₂₋₃-O-(CH₂)₂₋₃-SO₂-Z (2b), 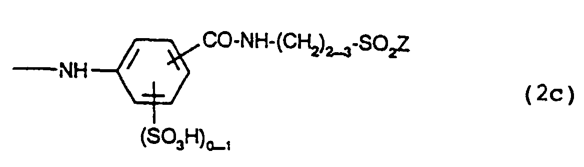
ou 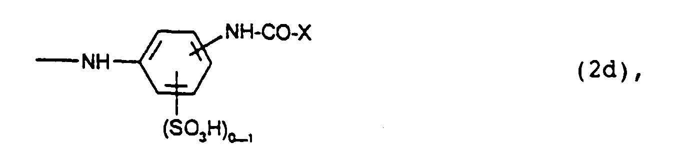
où
Z représente le reste -CH=CH₂ ou -CH₂-CH₂-Y et Y un groupe partant, et
X représente le reste 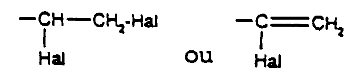 et Hal représente un atome d'halogène
D représente un reste de formule 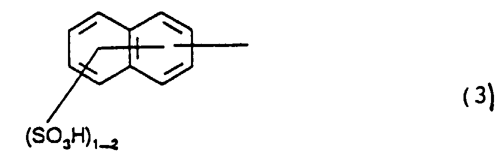 ou 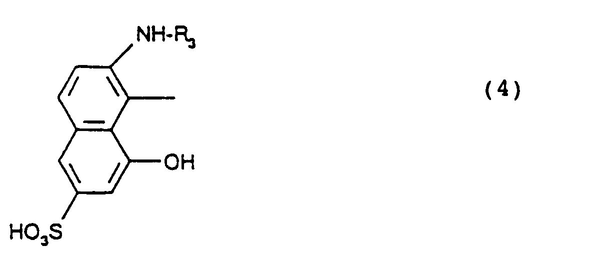
dans lesquelles
R₃ représente un atome d'hydrogène ou un groupe alkyle en C₁-C₄, et
les colorants réactifs de formule (1) ne contenant pas plus de deux groupes sulfo, à la condition que, lorsque D représente un reste de formule (3), V₁ représente un reste de formule (2d).

2. Colorants réactifs selon la revendication 1, caractérisés en ce que R₁ représente un atome d'hydrogène ou un groupe alkyle en C₁-C₄ éventuellement substitué par des groupes hydroxy, sulfo ou sulfato.

3. Colorants réactifs selon l'une des revendications 1 ou 2, caractérisés en ce que R₁ représente un atome d'hydrogène ou un groupe alkyle en C₁-C₄, en particulier un atome d'hydrogène.

4. Colorants réactifs selon l'une des revendications 1 à 3, caractérisés en ce que R₃ représente un atome d'hydrogène.

5. Colorants réactifs selon l'une des revendications 1 à 4, caractérisés en ce que X₁ représente un atome de chlore.

6. Colorants réactifs selon l'une des revendications 1 à 5, caractérisés en ce que Y représente -Cl ou -OSO₃H.

7. Colorants réactifs selon l'une des revendications 1 à 6, caractérisés en ce que Hal représente un atome de chlore ou de brome, en particulier de brome.

8. Colorants réactifs selon l'une des revendications 1 à 7, caractérisés en ce que le reste D de formule (3) contient deux groupes sulfo.

9. Colorants réactifs selon la revendication 1 de formule 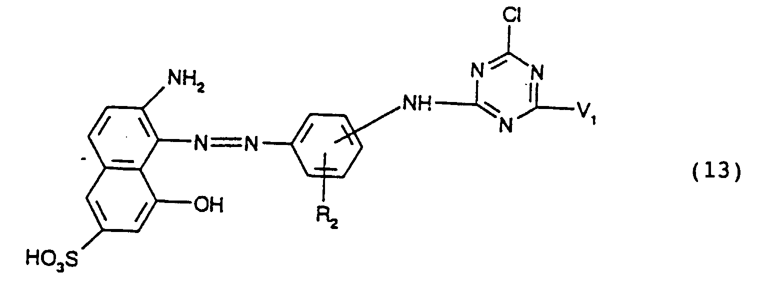 dans laquelle
R₂ représente un atome d'hydrogène, des groupes alkyle en C₁-C₄, alkoxy en C₁-C₄, (alcanoyl en C₂-C₄)amino, uréido, halogène ou sulfo, et
V₁ possède les significations données à la revendication 1.

10. Colorants réactifs selon la revendication 1 de formule 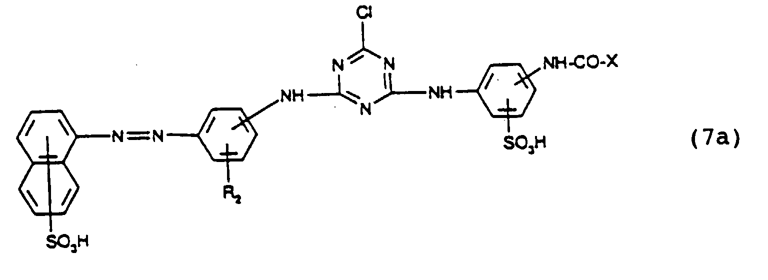 dans laquelle
R₂ représente un atome d'hydrogène, des groupes alkyle en C₁-C₄, alkoxy en C₁-C₄, (alcanoyl en C₂-C₄)amino, uréido ou halogène, et
X possède les significations citées à la revendication 1.

11. Colorants réactifs selon la revendication 1 de formule 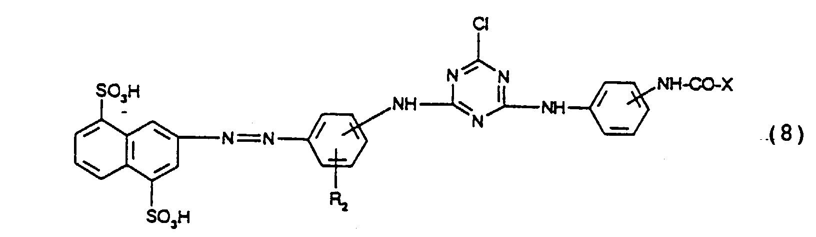 et 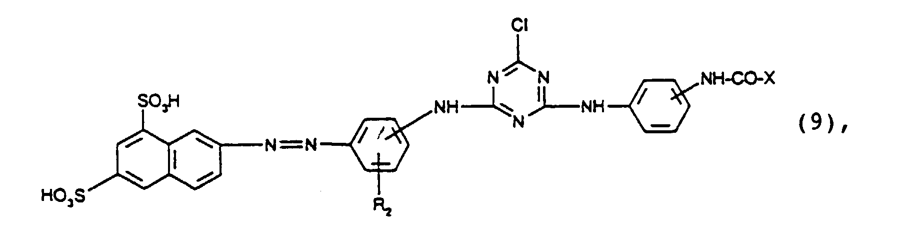 où
R₂ représente un atome d'hydrogène, des groupes alkyle en C₁-C₄, alkoxy en C₁-C₄, (alcanoyl en C₂-C₄)-amino, uréido ou halogène, en particulier des groupes alkyle en C₁-C₄, alkoxy en C₁-C₄, (alcanoyl en C₂-C₄)-amino, uréido ou halogène, et
X possède les significations données à la revendication 1.

12. Colorants réactifs selon l'une des revendications 1 à 9, caractérisés en ce que V₁ est un reste de formule (2c) ou (2d).

13. Colorants réactifs selon l'une des revendications 1 à 9, caractérisés en ce que V₁ est un reste de formule (2d).

14. Procédé de préparation de colorants réactifs selon la revendication 1, caractérisé en ce que l'on fait réagir des composés de formules 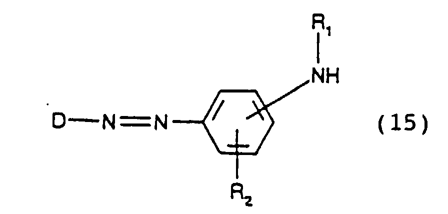 et
H-V₁ (16)
sur le chlorure de cyanuryle ou le fluorure de cyanuryle et l'on fait éventuellement suivre par une réaction de transformation, R₁, R₂, D et V₁ ayant les significations données à la revendication 1.

15. Utilisation des colorants réactifs obtenus selon l'une des revendications 1 à 13, respectivement selon la revendication 14, pour la teinture ou l'impression de matières de fibres contenant des groupes hydroxyle ou l'azote.

16. Utilisation selon la revendication 15 pour la teinture ou l'impression de matières de fibres polyamide naturelle ou synthétique.
